# EUROPEAN PATENT APPLICATION

(11) **EP 0 661 319 A1**
(43) Date of publication of application: **05.07.1995**
(21) Application number: 94120187.3
(22) Date of filing: 20.12.1994
(51) Int. Cl.: C08G 18/62, C08G 18/79, C08G 18/78, C09D 175/00, C09D 133/14, C09D 133/06

(54) **Improved high solids coatings suitable for ambient cure**

(30) Priority: 28.12.1993 US 174635
(71) Applicant: BASF CORPORATION, Mount Olive, New Jersey 08728-1234 (US)
(72) Inventor: Guyomard, Daniel, F-60260 Lamorlaye (FR); Dantiki, Sudhar, Toledo, Ohio 43617 (US)
(74) Representative: Münch, Volker, Dr.

(57) **Abstract**

The present invention is directed to a novel coating composition comprising:
a) 5-64 percent of an acrylic co-polymer comprising a copolymer with a glass transition between -10°C and 35°C (using the Fox method of Tg calculation) and a relative weight average molecular weight of 1000-7000.
b) 10 to 50 percent of an organic solvent,
c) 0 to 30 percent of a reactive oligomer,
d) 0 to 30 percent of a reactive diluent,
e) 0 to 3 percent of a curing catalyst and photostabilizer,
f) crosslinker preferably 0.75 to 2.0 isocyanate equivalents of an aliphatic polyisocyanate per active hydrogen based on a),
g) 0 to 3 percent of additives,
h) 0 to 2.0 P/B ratio pigments.

## Description

### FIELD OF THE INVENTION

The present invention relates to low volatile organic content solvent-born coatings especially useful in automotive paint compositions. Such coatings can serve as the vehicle for low volatile content sealers, basecoats, clearcoats, and single-stage color automotive paint coatings. Such paint compositions can use both isocyanate and non-isocyanate curing mechanisms.

### BACKGROUND OF THE INVENTION

The coatings industry has expended much effort to reduce emissions of volatile organic solvents. Government regulators, continuing the philosophy of the 1970 Clean Air Act, and dissatisfied with lack of progress in reduction of volatile organic emissions, have extended its scope from large Original Equipment (OEM) producers to the automotive refinish market. Products conforming to these regulations must meet customer requirements of several critical properties including fast out-of-dust time, fast tack-up, good water resistance, good chemical resistance, sag resistance, and excellent appearance. This must be performed in a range of climates such as from hot and humid to cold and dry with each localities' ambient temperature (i.e. no baking).

The regulations, like OEM regulations, are designed to force technology but in automotive refinish, users: 1) typically do not have the advantage of thermal-cure or baking; 2) do not wish to provide capital for expensive application equipment and/or emissions control devices, enabling use of conventional solids coatings; and 3) require products which can be applied over a wide range of application conditions.

In the past, the industry has been able to rely on solvent to supplement coatings systems to give rheological properties, but now the film forming solids (or vehicles) itself plays an even more important role in paint applications. The vehicle not only must serve to give final coating properties, but it also must absorb an even greater amount of the function of carrying the system to the substrate.

One approach to lowering solvent content of coatings has focused on lowering molecular weight, which in turn reduces viscosty, and the corresponding amount of solvent required for coating application. It is well-known (Journal of Coatings Technology, Vol. 57, p.83-88, (September, 1985)) that organic thiols serve as molecular weight regulators and can be used to produce low molecular weight acrylics. U.S. Patent 4,245,074 claims the use of a carboxylic acid functional mercaptan as a regulator to make polymers which are odorless.

A drawback of using mercaptan regulators, or chain transfer agents, is the strong odor associated with the final product. In addition Rhum and Aluotto noted that low molecular weight co-polymers utilizing mercaptan chain transfer agents have poor light stability (Journal of Coatings Technology, Vol. 55, No. 703, p. 75-79), (August 1987), (p. 76, col. 1).

Another approach using methyl isobutyl ketone in combination with an aromatic as a polymerization solvent has been disclosed in U.S. No. 4,501,868. This approach, however, is not well-suited for the coatings industry as Gerlock et al. have demonstrated a detrimental effect of ketone as a synthesis solvent ("Photostability of Acrylic/Melamine Enamels; Effect of Polymer Composition and Polymerization Conditions on Photoinitiation Rates", Progress in Organic Coatings, Vol. 15, pp. 197-208, (1987), (p. 206, 207)).

Likewise U.S. Pats. No. 4,855,369 and 4,985,517 disclose the use of alpha olefins to lower molecular weight for electrostatic applications. Although these patents do not teach utility in the automotive refinish area, they also limit the choice of monomers. In addition, they produce polymers with unreacted alpha olefin when used to make polymers of the molecular weight ranges described in this invention.

U.S. Pat. Nos. 4,276,432 and 4,075,242 disclose a process for preparing low molecular weight polymers which are liquid at room temperature using higher processing temperatures (above 150°C). These patents, however, require a distillation step and do not disclose the utility of these in non-bake coatings. Similarly Exxon brochure (1000 4/88 2M) "Exxate Solvents Provide Outstanding Appearance and Durability in High Solids Baking Enamels" describes the use of Exxate solvents for lowering the molecular weight of a butyl acrylate homopolymer, however it does not describe coating formulations in non-bake cure as are generally described herein.

Several methods have been disclosed in the literature which make use of a co-polymer consisting of an addition product of an organic acid and a glycidyl ester of aliphatic carboxylic acid with a tertiary carbon atom. U.S. Patent 4,210,702, British Patent 1,060,711 and British Patent 1,009,217 all use some variation of this procedure. These copolymers themselves, however, require a high solvent and/or additive content in order to make material which has acceptable application viscosity using commonly used equipment.

An approach based on polyesters is another route to high solid content coatings. Polyesters can either be used as the primary vehicle or as hydroxyl functional additives which lower coating application viscosity and subsequently crosslink into the film. U.S. Patent 3,028,367 identifies use of dihydric and trihydric alcohols as components of a possible solventless coating vehicle.

Typically, conventional acrylics and polyesters previously examined for use as low volatile organic content vehicles, while high in solid content, produced coatings which remain tacky for long periods of time when used at conventional application viscosity. In addition some of thse vehicles di not have adequate pot-life for use in commercial applications.

### SUMMARY OF THE INVENTION

The present invention relates to a novel coating composition comprising:
a) 5-64 percent of an acrylic co-polymer comprising a copolymer with a glass transition between -10°C and 35°C (using the Fox method of Tg calculation) and a relative weight average molecular weight of 1000-7000.
b) 10 to 50 percent of an organic solvent,
c) 0 to 30 percent of a reactive oligomer,
d) 0 to 30 percent of a reactive diluent,
e) 0 to 3 percent of a curing catalyst and photostabilizer,
f) crosslinker preferably 0.75 to 2.0 isocyanate equivalents of an aliphatic polyisocyanate per active hydrogen based on a),
g) 0 to 3 percent of additives,
h) 0 to 2.0 P/B ratio pigments.

According to one aspect of the present invention improved low VOC coating compositions with improved durability and low color are disclosed. The present invention is directed to a coating composition using a polymer which, when crosslinked with isocyanate or non-isocyanate crosslinker form coatings with excellent physical properties with short tack-free and dust-free time, excellent pot-life, and no strong mercaptan odor. While any substrate material can be coated with the coating compositions according to the present invention, including such things as glass ceramic, paper, wood and plastic material depending on the specific drying and/or curing requirements of the particular composition, the coating system of the present invention is particularly adapted for metal and plastic substrates, and specifically, as an automotive paint refinish system at ambient temperatures or force dry conditions. The substrate may also be bare substrate material or can be conventionally primed, for example to impart corrosion resistance. Exemplary metal substrates include such things as steel, aluminum, copper, zinc, magnesium, alloy thereof, etc. The components of the compositions can be varied to suit the temperature tolerance of the substrate material. For example, the components can be so constituted for air drying (i.e. ambient, low temperature cure (50°-110°F)), force dry (up to 180°F), or bake dry, e.g. over 180°F).

The coating compsoitions of the present invention can be used as clearcoat, pigmented topcoats or as the basecoat of pigmented basecoat/clearcoat topcoat multi-coat compositions. It is preferred to use the coatings of the present invention as a pigmented topcoat or clearcoat. Although the pigmented topcoat and clearcoat coating is preferred, it will be appreciated that the coatings described herein can have utility as pigmented basecoat.

When a clear is used containing the low VOC resin of the present invention it may be coated over any basecoat known to the art. When a basecoat is clear-coated with a low VOC or conventional resin, superior paint compositions are obtained.

The basecoat material, i.e., the pigmented polymer layer closest to the substrate, comprises any suitable film-forming material conventionally used in this art including acrylics, alkyd, polyurethanes, polyesters, and aminoplast. The basecoat can be deposited out of an aqueous carrier, or out of conventional volatile organic solvents such as aliphatic, cycloaliphatic and aromatic hydrocarbons, esters, ketones, and alcohols, including solvents such as toluene, xylene, butyl acetate, acetone, methyl isobutyl ketone, butyl alcohol, etc. When using volatile organic solvents, although it is not required, it is preferred to include a conventional rheology control aent such as about 2 percent to about 40 percent of a cullulose ester and/or wax (e.g. polyethylene) which facilitates quick release of the volatile organic solvent resulting in improved flow or leveling out of the coating. The cellulose esters used must be compatible with the particular resin systems selected and include such things as cellulose nitrate, cellulose propionate, cellulose butyrate, cullulose acetate butyrate, cellulose acetate propionate, and mixtures thereof. The cellulose esters when used are preferably used in about 5 percent to about 20 percent by weight based on film forming solids.

Other types of rheology control agents conventional in this art include microparticles or microgels. These microgels or microparticles comprise polymer particles in a dispersed state. Microparticle or microgel dispersions, also known as nonaqueous dispersions, useful a rheology control agents in basecoats are disclosed in U.S. Pat. Nos. 3,365,414, 4,290,932, 4,377,661, 4,414,357, 4,447,536, which are incorporated by reference.

### DESCRIPTION OF PREFERRED EMBODIMENT

The present invention relates to a novel coating composition of:
a) 5-65 percent of an acrylic co-polymer comprising a copolymer with a glass transition between -10°C and 35°C (using the Fox method of Tg calculation) and a relative weight average molecular weight of 1000-7000.
b) 10 to 50 percent of an organic solvent,
c) 0 to 30 percent of a reactive urethane oligomer,
d) 0 to 30 percent of a reactive diluent,
e) 0 to 3 percent of a curing catalyst and photostabilizer.
f) 0.75 to 2.0 isocyanate equivalents per active hydrogen of an aliphatic polyisocyanate based on a),
g) 0 to 3 percent of additives,
h) 0 to 2.0 P/B ratio pigments.

According to the present invention, especially preferred are high solids low VOC basecoats, clearcoats and single stage topcoats comprising about 5 to about 65 weight percent, preferably about 3 to about 50 weight percent copolymer, about 10 to about 50 weight percent, preferably about 30 to about 45 percent organic solvents, about .75 to about 2.0, preferably .9 to about 1.5 equivalents of functionality per active hydrogen contained on copolymer and oligomer used of crosslinking agents. 0 to 10 percent additives such as accelerators, mar and slip agents, flow modifiers, anti-settle agents, pigment wetting agents, ultra violet light absorbers and stabilisers, 0 to 35 percent pigments and extenders may also be used.

Preferred co-polymers which, when crosslinked with isocyanate or non-isocyanate crosslinker, form coatings which have excellent physical properties with short tack-free and dust-free time, excellent pot-life, ultraviolet durability, and no strong mercaptan odor.

The low VOC coating composition useful to form the clearcoat and single stage formulation as well as the basecoat formulation are typically made from a copolymer consisting of: the polymerization of ethylenically unsaturated monomers containing hydroxyl groups and other vinyl monomers wherein the copolymer components are combined in such a manner to give a polymer with a glass transition between-10°C and 35°C (using the Fox method of Tg calculation) and a relative weight average molecular weight of 1000-7000 based on GPC using polystyrene standards wherein the ethylenically unsaturated hydroxyl monomers are those commonly known in the art, for example, hydroxy functional vinyl compounds such as hydroxyethyl methacrylate, allyl alcohol, hydroxypropyl methacrylate, hydroxyethyl acrylate, hydroxypropyl acryalte, hydroxybutyl acrylate, hydroxybutyl methacrylate, sechydroxybutyl acrylate wherein the othr vinyl monomers are those commonly known in the art, for example, vinyl compounds such as vinyl toluene, vinyl pyrolidone, acrylonitrile, methacrylamide, methacrylonitrile, diethyl fumarate, dimethyl itaconate styrene; alkyl acrylates such as glycidyl acrylate, n-butyl acrylate, 2-ethylhexyl acrylate, t-butyl acrylate, octylacrylate, 2-methoxyethyl acrylate acrylic acid, ethyl acrylate, lauryl acrylate, stearyl acrylate, cyclohexyldiacrylate; alkyl methacrylate such as n-butyl methacrylate, isobutyl methacrylate, isodecyl methacrylate, secondary butyl methacrylate, amyl methacrylate, t-butylmethacrylate cyclohexyl methacrylate, 2-methoxyethyl methacrylate, n-oxtylmethacrylate, nonyl methacrylate, n-propyl methacrylate, hexyl methacrylate lauryl methacrylate, methacrylic acid, 2-ethylhexyl methacrylate, glycidyl methacrylate, ethyl methacrylate, t-butylaminoethyl methacrylate, at temperatures greater than about 150°C, preferably higher than 162°C.

The copolymer can also consist of: the poymerization of ethylenically unsaturated monomers containing vinyl monomers, wherein at least one of the vinyl monomers is glycidyl or acid functional, and optionally vinyl monomers containing hydroxyl groups wherein the copolymer components are combined in such a manner to give a polymer with a glass transition between -10°C and 35°C (using the Fox method of Tg calculation) and a relative weight average molecular weight of 1000-7000 based on GPC using polystyrene standards wherein the optional ethylenically unsaturated hydroxyl monomers are those commonly known in the art, for example, hydroxy functional vinyl compounds such as hydroxethyl methacrylate, hydroxypropyl methacrylate, hydroxyethyl acrylate, hydroxypropyl acrylate, allyl alcohol, hydroxybutyl acrylate, hydroxy butyl methacrylate, sec-hydroxybutyl acrylate, wherein the acid functional monomers are those commonly known in the art, for example, the group of vinyl monomers such as acrylic acid, methacrylic acid, wherein the glycidyl functional monomers are those commonly known in the art, for example, the group of vinyl monomers such as glycidyl methacrylate, glycidyl acrylate, wherein the other vinyl monomers are those commonly known in the art, for example, vinyl compounds such as vinyl toluene, acrylonitrile, methacrylamide, methacrylonitrile, diethyl fumarate, dimethyl itaconate vinyl pyrolidone, styrene; alkyl acrylates such as n-butyl acrylate, 2-ethylhexyl acrylate, acrylic acid, ethyl acrylate, t-butyl acrylate, octylacrylate, 2-methoxyethyl acrylate, lauryl acrylate, stearyl acrylate, cyclohexyldiacrylate; alkyl methacrylate such as n-butyl methacrylate, secondary butyl acrylate, amylmethacrylate, t-butylmethacrylate cyclohexyl methacrylate, 2-methoxyethyl methacrylate, n-octylmethacrylate, nonylmethacrylate, n-propyl methacrylate, hexyl methacrylate isobutyl methacrylate, isodecyl methacrylate, lauryl methacrylate, methacrylic acid, 2-ethylhexyl methacrylate, ethyl methacrylate, t-butylaminoethyl methacrylate, which is subsequently or in situ reacted to a fatty acid through glycidyl groups or which is subsequently or in situ reacted to the glycidyl ester of an organic acid through organic acid groups, at temperatures greater than about 150°C, preferably higher than 162°C.

Initiators which may catalyze polymerization by liberation of free radicals are those commonly known in the art, for example, tertiary butyl peroxide, VAZO 67 (2,2'-azobis(methylbutyronitrile)), dicumyl peroxide, and VAZO 88 (1,1'-azobis(cyaocyclohexane)). Solvents suitable for reaction are those commonly known in the art, for example, toluene, xylene, ethanol, isopropanol, n-butanol, 2-butanol, methanol ethyl ketone, methyl amyl ketone, methyl isobutyl ketone, amyl acetate, n-butyl acetate, propylene glycol monomethyl ether acetate, ethylene glycol butyl ether acetate, 3-methoxy n-butyl acetate, ethylene glycol butyl ether, acetic acid ester of branched C6-8 oxo-alcohol, heptyl acetate, ethylene glycol monobutyl ether, diethylene glycol butyl ether and ethoxy propionate. Especially preferred are methyl ethyl ketone, methyl amyl ketone, acetic acid ester of branched C6-8 oxo-alcohol, hexyl acetate, heptyl acetate, ethylene glycol monobutyl ether, diethylene glycol butyl ether and ethoxy propionate, methyl isobutyl ketone, toluene, xylene, heptyl acetate, hexyl acetate, 3-methoxy n-butyl acetate, ethylene glycol butyl ether acetate, ethyl 3-ethoxy propionate. Solvents of utility in the coatings are those commonly used in the art. These solvents include but are now limited to toluene, xylene, ethanol, isopropanol, n-butanol, 2-butanol, methyl ethyl ketone, methyl amyl ketone,methyl isobutyl ketone, amyl acetate, n-butyl acetate, propylene glycol monomethyl ether acetate, ethylene glycol butyl ether acetate, 3-methoxy n-butyl acetate, ethylene glycol butyl ether, acetic acid ester of branched C6-8 oxo-alcohol, hexyl acetate, acetic acid ester of branched C6-8 oxo-alcohol, acetic acid ester of branched C6-8 oxo-alcohol, acetic acid ester of branched C6-8 oxo-alcohol, heptyl acetate, ethylene glycol monobutyl ether, diethylene glycol butyl ether and ethyl 3-ethoxy propionate.

The above co-polymers may also be used in conjunction with oligomeric polyols such are as formed from the reaction product of multi-functional isocyanate and mono and/or multi-functional alcohols. These multi-functional isocyanate include but are not limited to biurets, isocyanurates, uretdiones, or adducts of toluene diisocyanate, hexamethylene diisocyanate, isophorone diisocyanate, and meta-tetramethyl xylene. The alcohols include but are not limited to ethanol, 2-ethyl hexanol, propanol, butanol, ether alcohols such as ethylene glycol monobutyl ether, ethylene glycol monopropylether, 1,2 propanediol, and benzyl alcohol.

Both isocyanate and non-isocyanate crosslinking agents may be used in these coating compositions. Crosslinking agents of utility in these coatings are those commonly used in the refinish market. They include, but are not limited to biurets, isocyanurates, or adducts of toluene diisocyanate, hexamethylene diisocyanate, isophorone diisocyanate, and meta-tetramethyl xylene. Reaction products of melamine or urea and formaldehyde and various alcohols containing up to and including four carbon atoms. This includes partially alkylated melamine-formaldehyde resins and fully alkylated aminoplast ofa low imino content such as Monsanto Resimene RF4518. Also finding utility when used with the non-isocyanate crosslinking agents are ketone and aldehyde modifying resins which include but are not limited to BASF Laropal A81, Karioak K80; Huls America Synthetic resin AP, Synthetic resin H, and Synthetic resin BL 1201 and ICI Lumiflon LF-916. In addition the reaction product obtained from a multi-functional amine with an aldehyde and/or ketone may be used as a co-reactant agent as described in IN-3394 U.S. application with serial number 745,900 filed on September 27, 1991.

Especially preferred are 1,6 hexamethylene diisocyanate isocyanurate, isophorone diisocyanate isocyanurate, Monsanto Resimene RF4518, BASF Laropal A81, and ICI Lumiflon LF-916.

Additives of utility in these coatings are those commonly used in the art. Mar and slip agents and defoamers which find utility included but not limited to are Byk 304, Byk 306, Byk 307, Byk 325, Byk 341, Dow Corning #7, Dow Corning #54, Dow Corning $200, General Electric SF-69, Tego Glide 410, Mobay OL44, Byk 331, Troysol AFL, Troysol 307, Troysol S366, Byk141, especially preferred is Byk 331, Byk 141, Troysol AFL, Troysol 307, Troysol S366, Byk 325.

Also finding utility are cure accelerators which include but are not limited to organo-metallic compounds such as dibutyltin dioxide, dibutyltin dilaurate, zinc octoate; amine compounds such as triethylamine, 2-diethylaminoethanol, triethylene diamine; organic acids such as p-toluene sulfonic acid, dinonylnapthalene, disulfonic acid, and dibutyl sulfonic acid. Especially preferred are dibutyl tin dilaurate, 2-diethylaminoethanol, and p-toluene sulfonic acid.

Also finding utility are flow and rheology modifying agents which include but are not limited to synthetic amorphous hydrophobic silica such as Degussa Aerosil R972, synthetic amorphous hydrophilic silica Degussa Aerosil 200, organ clays, polyethylene wax dispersions, polypropylene wax dispersions, polyamide wax dispersions, ethylene vinyl acetate wax dispersions. Agents such as Byk chemie Anti-terra 202, Anti-terra 204, Anti-terra V, BykW-960, Byk R-405, Byk P-104, Byk P-104s; Troy Chemical Troythix Antisag 4, Troythix Antisettle; Raybo Chemical Raybo 6, Raybo 94, and Tego Chemie ZFS 460. Especially preferred are Degussa Aerosil R972, Byk W960, and Byk R405.

Also finding utility are pigment wetting and dispersing aids which include but are not limited to ICI Solsperse hyperdispersants such as Solsperse 5000,12000, 22000, and 24000; Troy Chemical Troysol CDI, Troysol CD2, and Troysol 98C; Daniel Products DispersAyd 9100; Raybo Chemical Raybo 63; Byk Chemie Anti-terra U, Anti terra 202, Byk W-960, Byk P-104 Disperbyk 160, Disperbyk 162, Disperbyk 163; Nuodex Nuosperse 657, Nuosperse 700. Especially preferred is Disperbyk 163 and Byk W-960.

Also finding utility in these coatings are ultraviolet light absorbers and stabilizers which include but are not limited to Sandoz Chemicals Sanduvor 3206, Sanduvor VSU, Sanduvor 3050; Ciba Geigy Corporation Tinuvin 292, Tinuvin 123, Tinuvin 384, Tinuvin 328, Tinuvin 440, Tinuvin 900, Tinuvin 1130. Especially preferred are Tinuvin 292 and Tinuvin 1130.

Also finding utility in these coatings are various types pigments common to the art which include but are not limited to Titanium dioxide, phthalocyanine blue, phthalocyanine green, carbon black, quinacridone, carbazole violet, isoindoline, pyrrolopyrrol, isoindolin, azomethine, anthraquinone, lead chromate molybdate, lead sulfa chromate, ferric oxides, magnesium silicates and aluminum. Especially preferred are Dupont Ti-Pure Titanium dioxides and Mobay B4730 phthalocyanine blue, Toyo 7130 N aluminum, Hoechst Novoperm Red F2RK-70, and Hoechst Permanent Yellow HR-70.

The following examples are used for illustration of the described invention and are not meant to limit in any way the scope of the invention. Unless noted otherwise the raw materials used were commercially available with the following ingredients defined as:
- ORGANIC SOLVENTS: those organic solvents common to the art.
- ADDITIVES: mar and slip silicones, flow control additives, defoamers, dispersants, anti-settling adis, and accelerator catalysts common to the art.

The following methods were used to evaluate the coatings compositions:
A) QUV 313 (GM cycle, accelerated weathering): test panels cured for two weeks were placed into QUV (313 nanometer wavelength) after determining 20 degree gloss. Appearance and gloss were checked weekly and panels were rotated to ensure uniform exposure until failure.
B) XENON WEATHER-0-METER: test panels cured for two weeks were placed into a watherometer after determining 20° gloss. Appearance and gloss were checked weekly and panels were rotated to ensure uniform exposure until failure.
C) DUST FREE TIME: the paint to be tested is spray applied to a 4" by 12" bare steel panel at a dry film thickness of 2.0 to 2.5 mils. At appropriate time intervals approximately 1.0 gram of clean dry sea sand is applied to the surface. The sand is allowed to rest on the surface for 15 seconds, then the panel is struck sharply on its side in order to dislodge the sand. The paint is considered dust free if all or all but a few of the grains of sand are removed.
D) TACK FREE TIME: the paint to be tested is spray applied to a 4" by 12" bare steel panel at a dry film thickness of 2.0 to 2.5 mils. At appropriate time intervals approximately 1 inch square piece of typing paper is placed on the film. A 100 gram, 1 aquare inch flat weight is then placed on the paper for one minute. Upon removal of the 100 gram weight, the panel is struck sharply on its side in order to dislodge the paper. The paint is considered tack-free when the paper comes off the panel when struck.
E) PENDULUM HARDNESS: Koenig pendulum hardness tester comprises a steel bar cpaable of oscillating on two hardened steel hemispheres fixed to the underside of the bar. A panel is held level in a suitable clamp above bench level and the pendulum bar is placed upon the surface to best tested with the steel hemispheres in contact with the panel. The pendulum is allowed to swing, measuring a "damping effect" and the time taken (in number of swings) for the decrease from full amplitude of the swing to a deflection of half amplitude (6° to 3°), is taken as the pendulum hardness (Koenig).
F) GAS RESISTANCE: A 1/8 portion of a 2 1/2 inch cotton cosmetic pad (cut radially into equal parts) is saturated with 1 cc of unleaded premium gasoline. This cotton pad is then covered with a metal cap. A weight (500 gm.) is placed on the cap to ensure a seal. After 5 minutes, the weight is removed, along with the cap and cotton pad. The area is then checked for swelling, softening or other defects.
g) POT-LIFE: the elapsed time for the initial mixed viscosity (in seconds with a #4 Ford cup) to double. This test gives an indication of the length of time the coating is in a state suitable for spraying.

## Claims

1. A coating composition comprising:
a) 5-64 percent of an acrylic co-polymer comprising a copolymer with a glass transition between -10°C and 35°C (using the Fox method of Tg calculation) and a relative weight average molecular weight of 1000-7000.
b) 10 to 50 percent of an organic solvent,
c) 0 to 30 percent of a reactive oligomer,
d) 0 to 30 percent of a reactive diluent,
e) 0 to 3 percent of a curing catalyst and photostabilizer,
f) 0.75 to 2.0 isocyanate equivalents of an aliphatic polyisocyanate per active hydrogen based on a),
g) 0 to 3 percent of additives,
h) 0 to 2.0 P/B ratio pigments.

2. The coating composition of claim 1 wherein the reactive oligomer is a urea/urethane oligomer.
